# EUROPÄISCHE PATENTSCHRIFT

(11) **EP 3 831 567 B1**
(45) Veröffentlichungstag und Bekanntmachung des Hinweises auf die Patenterteilung: **21.02.2024**
(21) Anmeldenummer: 20204066.3
(22) Anmeldetag: 27.10.2020
(51) Int. Cl.: B29B 17/02

(54) **VERFAHREN ZUM RECYCLING VON FAHRZEUGLUFTREIFEN MIT DICHTMITTELLAGE**
METHOD FOR RECYCLING PNEUMATIC VEHICLE TYRES WITH A SEALING AGENT LAYER
PROCÉDÉ DE RECYCLAGE DES PNEUMATIQUES DE VÉHICULE POURVUS DE COUCHE INTERMÉDIAIRE D'ÉTANCHÉITÉ

(30) Priorität: 06.12.2019 DE 102019219082
(43) Veröffentlichungstag der Anmeldung: 09.06.2021
(73) Patentinhaber: Continental Reifen Deutschland GmbH, 30165 Hannover (DE)
(72) Erfinder: Kunze, Christian, 30419 Hannover (DE); Doroshenko, Mikheil, 30419 Hannover (DE)
(74) Vertreter: Continental Corporation

(56) Entgegenhaltungen:
- EP-A1- 3 074 212
- EP-B1- 3 074 212
- US-A- 4 278 413
- US-A- 5 845 992
- US-A1- 2015 197 038
- US-B2- 6 979 384

## Beschreibung

Die Erfindung betrifft ein Verfahren zum Recycling von Fahrzeugluftreifen aufweisend wenigstens ein Dichtmittel auf der dem Laufstreifen gegenüberliegenden Innenfläche.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen. Das Dichtmittel zeichnet sich durch Luftdichtigkeit, starke Klebrigkeit und ausgewogenes Fließverhalten aus.

Die starke Klebrigkeit des Dichtmittels erschwert jedoch das Recycling dieser Reifen. Üblicherweise werden Reifen -ohne Dichtmittel- beim Recycling zunächst zerkleinert. Sollte sich unter den Reifen einer befinden, der ein Dichtmittel aufweist, so ist das Zerkleinern durch die Klebrigkeit des Dichtmittels stark erschwert, da das Dichtmittel an der Zerkleinerungsvorrichtung klebt und die weitere Zerkleinerung immer weiter erschwert. Aus der US6979384 ist ein Recyclingverfahren für herkömmliche Reifen ohne Dichtmittel bekannt, bei dem die Stahlseile induktiv erhitzt, und die so im Reifen gebildete Blase zwecks Entfernung der Stahlseile aufgeschnitten wird.

Der vorliegenden Erfindung liegt daher die Aufgabe zugrunde ein Verfahren zum Recycling von Fahrzeugluftreifen aufweisend wenigstens ein Dichtmittel auf der dem Laufstreifen gegenüberliegenden Innenfläche (Fahrzeugluftreifen mit Dichtmittel) bereitzustellen, bei dem eine Verschmutzung und damit der Ausfall der Recycling-Vorrichtung vermieden werden. Gleichzeitig soll das Verfahren möglichst einfach sein.

Gelöst wird die Aufgabe durch das erfindungsgemäße Verfahren nach Anspruch 1, wobei es wenigstens die folgenden Verfahrensschritte umfasst:
a) Bereitstellung eines zu recycelnden Fahrzeugluftreifens mit Dichtmittel;
b) Trennung der Seitenwände von der Lauffläche, sodass ein Laufstreifenring und die Seitenwände erhalten werden;
c) Umstülpen des Laufstreifenringes oder Durchtrennung des Laufstreifenringes in axialer Richtung, um das Dichtmittel zugänglich zu machen;
d) Entfernen des Dichtmittels;
e) Recycling der abgetrennten Seitenwände sowie des zurückbleibenden Laufstreifens ohne Dichtmittel;
f) Optional separates Recycling des Dichtmittels.

Dadurch, dass in Schritt d) das Dichtmittel entfernt wird, bevor der Reifen in Schritt e) recycelt wird, wird die Recycling-Vorrichtung nicht mit klebrigem Dichtmittel verschmutzt.

Dadurch, dass Schritt d) ein Verfahrensschritt innerhalb des Recyclings darstellt und nicht in einem separaten Schritt vorher durchgeführt wird, ist das erfindungsgemäße Verfahren vergleichsweise einfach. Zudem lässt sich das Dichtmittel besser entfernen, wenn die Seitenwände zuvor entfernt wurden. Hierdurch lässt sich nämlich das zu entfernende Dichtmittel besser zugänglich machen, s. Schritt c).

Unter den Begriffen "Laufstreifenring" oder "Laufstreifen" wird im Rahmen der vorliegenden Erfindung der Teil des Reifens verstanden, der insbesondere durch das Entfernen der Seitenwände erhalten wird. Dem Fachmann ist klar, dass sich radial einwärts vom Laufstreifen noch übliche Lagen, wie Gürtelpaket, Karkasslage und Innenschicht, sowie ferner, bevor Schritt d) durchgeführt wird, das Dichtmittel befinden.

Gemäß vorteilhafter Ausführungsformen der Erfindung werden in Schritt b) die Seitenwände mittels eines Schnittwerkzeuges oder mittels eines Lasers oder mittels Wasserstrahls abgetrennt.

Bevorzugt wird ein Schnittwerkzeug, wie eine Klinge (Schneide) oder Säge verwendet, welche vergleichsweise einfach implementiert werden kann.

Die Klinge kann als gerade Klinge (Messer, Säge) oder als Rundklinge, ähnlich einer Kreissäge, ausgeführt sein.

Gemäß vorteilhafter Ausführungsformen der Erfindung erfolgt in Schritt d) das Entfernen des Dichtmittels mittels eines mechanischen Werkzeuges, insbesondere eines Schnittwerkzeuges wie einer Klinge oder einem Fräser.

Hierdurch ist das Verfahren besonders umweltfreundlich, da insbesondere keine giftigen organischen Lösungsmittel verwendet werden.

Bei der Klinge handelt es sich insbesondere um eine Messerklinge. Eine Fräse weist einen Fräskopf auf.

Geeignete Klingen und Fräsen sind dem Fachmann bekannt und umfassen in der Regel Stahllegierungen.

Die Klinge und der Fräskopf sind dabei bevorzugt aus Stahl gefertigt, sodass sie eine ausreichende Festigkeit aufweisen, das vergleichsweise hochviskose Dichtmittel zu entfernen. Gleichzeitig sind sie damit ökonomisch sinnvoll.

In einer weiteren bevorzugten Ausführungsformen kann das Dichtmittel auch mit einem Wasserstrahl, insbesondere Hochdruck-Wasserstrahl, entfernt werden. Hierzu übliche Vorrichtungen und Drücke sind dem Fachmann bekannt.

Das Umstülpen (Umkrempeln) des Laufstreifenringes gemäß Schritt c) kann auch mittels maschineller Unterstützung erfolgen, insbesondere dann, wenn das erfindungsgemäße Verfahren automatisiert durchgeführt wird.

Die Durchtrennung des Laufstreifenringes erfolgt mittels bekannten Trennvorrichtungen, wie einem Schnittwerkzeug.

Gemäß vorteilhafter Ausführungsformen der Erfindung wird der umgekrempelte Laufstreifenring nach Schritt c) auf eine trommelförmige Vorrichtung gespannt, wobei das Dichtmittel nach außen gerichtet ist.

Dadurch, dass das der Laufstreifen mit dem Dichtmittel nach außen weisend auf eine Trommel gespannt wird, wird beim Entfernen des Dichtmittels ein ausreichender Gegendruck erzeugt.

Bevorzugt ist die trommelförmige Vorrichtung expandierbar. Hierdurch kann die Fixierung verbessert werden, sodass das Dichtmittel mit weniger Aufwand und schneller entfernt werden kann. Zudem können somit Laufstreifenringe verschiedener Größen verarbeitet werden.

Gemäß vorteilhafter Ausführungsformen werden dabei die trommelförmige Vorrichtung und/oder die Vorrichtung, wie Klinge oder Fräse, zum Entfernen des Dichtmittels, in Rotation versetzt und das Entfernen in Schritt d) erfolgt unter Rotation.

Beispielsweise kann nur die trommelförmige Vorrichtung in Rotation versetzt werden. Hierdurch kann die Vorrichtung, wie Klinge oder Fräse, zum Entfernen des Dichtmittels in einer konstanten Position verbleiben. Das erfindungsgemäße Verfahren kann dadurch effizienter durchgeführt werden.

Alternativ kann die Vorrichtung, wie Klinge oder Fräse, zum Entfernen des Dichtmittels in Rotation versetzt werden. Weiterhin ist es denkbar sowohl die trommelförmige Vorrichtung als auch die Vorrichtung, wie Klinge oder Fräse, zum Entfernen des Dichtmittels, in Rotation zu versetzen, wobei bevorzugt der Drehsinn beider Teile gegenläufig ist.

Gemäß weiterer vorteilhafter Ausführungsformen der Erfindung wird der durchgetrennte Laufstreifenring nach Schritt c) auf einem Förderband angeordnet und das Entfernen in Schritt d) erfolgt bei konstanter Fortbewegung. Es versteht sich, dass das Dichtmittel hierbei nach oben gerichtet ist und nicht zwischen Förderband und Laufstreifen.

Auch hierbei wird durch das Förderband ein ausreichender Gegendruck erzeugt, sodass das Dichtmittel leichter entfernt werden kann.

Gemäß einer besonders vorteilhaften Ausführung der Erfindung wird der durchgetrennte Laufstreifenring, also das Laufstreifenband, mit einem Elektromagneten auf dem Förderband fixiert. Dies ist insbesondere dann besonders gut möglich, wenn das Laufstreifenband Gürtellagen aus Stahl enthält, was bei den meisten zu recycelnden Reifen der Fall ist.

Ferner kann die Schnittvorrichtung, wie Klinge oder Fräse, zum Entfernen des Dichtmittels in einer konstanten Position verbleiben, indem der Laufstreifen mit Dichtmittel nach oben weisend z. B. unter der Klinge oder der Fräse entlang bewegt wird.

Es ist aber auch hier ebenso denkbar, dass die die Schnittvorrichtung entlang des Dichtmittels bewegt wird und der Laufstreifen mit Dichtmittel in konstanter Position verbleibt.

Ebenso ist es hier denkbar, dass beide in Gegenrichtung aufeinander zu bewegt werden.

Gemäß vorteilhafter Ausführungsformen der Erfindung wird in Schritt d) ein Prozesshilfsmittel, wie Wasser und/oder eine Seifenlösung, verwendet. Hierdurch kann sich das Dichtmittel - je nach Eigenschaften, wie Klebrigkeit, Fließverhalten und Zugfestigkeit, des Dichtmittels - ggf. einfacher entfernen lassen.

Das Prozesshilfsmittel wird dabei bevorzugt durch Sprühen aufgetragen. Hierdurch lässt es sich ökonomisch und ökologisch sinnvoll dort gezielt verteilen, wo es benötigt wird.

Ein weiterer Vorteil des Prozesshilfsmittels besteht darin das Material zu kühlen, was insbesondere eine höhere durchführbare Geschwindigkeit des Verfahrens bedeutet und außerdem die Verschmutzung und Abnutzung der Schnittvorrichtung vermindert.

Gemäß vorteilhafter Ausführungsformen der Erfindung erfolgt einer oder mehrere der beschriebenen Schritte automatisiert, insbesondere mittels eines Roboters. Hierdurch können die Schritte mit konstanter Qualität und effizient und zeitsparend durchgeführt werden.

Der Laufstreifen ohne Dichtmittel und die abgetrennten Seitenwände werden gemäß Schritt e) recycelt, und zwar insbesondere zunächst zerkleinert. Da nun kein klebriges Dichtmittel an diesen Reifenbauteilen anhaftet, wird die Zerkleinerungsvorrichtung nicht verschmutzt und kann länger verwendet werden.

Das Recycling von Laufstreifen und Seitenwänden erfolgt ansonsten mit dem Fachmann bekannten Verfahren und Vorrichtungen.

Optional wird das Dichtmittel ebenfalls recycelt, beispielsweise durch thermische Prozesse, wobei dies der Energiegewinnung dienen kann und/oder Füllstoffe als Additive beispielsweise für Asphaltmischungen anfallen.

Bei dem Dichtmittel kann es sich prinzipiell um jegliches dem Fachmann bekanntes Dichtmittel handeln.

Beispielsweise kann es ein nachträglich aufgetragenes Dichtmittel sein, welches im Pannenfall durch eine Pumpvorrichtung in den Reifen eingetragen wird. Derartige Dichtmittel, die Kautschuklatex und ein Gefrierschutzmittel enthalten, sind z. B. aus der DE 195 42 935 A1, der DE 197 53 630 A1, der DE 197 58 820 A1, der DE 198 44 177 A1 und der US 4,501,825 bekannt.

Gemäß einem weiteren Beispiel ist das Dichtmittel ein Dichtmittel, welches umlaufend auf der Reifeninnenseite angebracht ist und im Pannenfall in die Einstichstelle fließt und diese verschließt, wie eingangs ausgeführt.

Bei dem Dichtmittel kann es sich um alle geeigneten und dem Fachmann bekannten Dichtmittelzusammensetzungen handeln, wie beispielsweise auf Silikonbasis, oder auf Basis von Polyurethan oder basierend auf der Vernetzung eines Kautschuks und/oder eines Polyolefins.

Das erfindungsgemäße Verfahren ist besonders gut für die genannten Zusammensetzungen geeignet.

Insbesondere basiert das zu entfernende Dichtmittel auf der Vernetzung eines Kautschuks und/oder eines Polyolefins.

Das Dichtmittel haftet insbesondere durch seine Klebrigkeit auf der Reifeninnenseite, üblicherweise auf der Reifeninnenschicht, sodass es sich nicht ohne Weiteres Entfernen lässt. Daher ist in Schritt d) des erfindungsgemäßen Verfahrens das Entfernen, insbesondere mittels eines Schnittwerkzeuges und beispielsweise mit Hilfe eines Prozesshilfsmittels, vorgesehen.

Beispielsweise enthält das Dichtmittel folgende Bestandteile in folgenden Mengen:
- 10 bis 50 Gew.-% wenigstes eines Polyolefins, bevorzugt wenigstens eines Polybutens, und
- 2,0 bis 30 Gew.-% wenigstens eines Klebrigmachers, insbesondere Kohlenwasserstoffharzes, und
- 15 bis 60 Gew.-% wenigstens eines Kautschuks, insbesondere Butylkautschuk, und
- 2,0 bis 22 Gew.-% wenigstens eines Füllstoffs, insbesondere Ruß, und
- 1,0 bis 3,0 Gew.-% wenigstens eines Vernetzers, insbesondere ein Chinondioxim, und
- 1,8 bis 4,8 Gew.-% wenigstens eines Vernetzungsinitiators, insbesondere eine peroxidische Verbindung.

Das erfindungsgemäße Verfahren ist besonders gut geeignet, Reifen mit einem Dichtmittel dieser oder vergleichbarer Zusammensetzung und/oder Viskosität zu recyceln.

Es ist ferner denkbar, dass bei dem zu recycelnden Fahrzeugluftreifen mit Dichtmittel auf der nach radial einwärts (nach innen) gerichteten Oberfläche des Dichtmittels eine farbige Lage angeordnet ist. Durch diese lässt sich der zu recycelnde Fahrzeugluftreifen mit Dichtmittel besser von Fahrzeugluftreifen ohne Dichtmittel unterscheiden, beispielsweise über einen Farbdetektor. In einem vorherigen Verfahrensschritt (vor Schritt a)) ist somit gemäß vorteilhafter Weiterbildungen der Erfindung eine ggf. automatisierte Detektion von Fahrzeugluftreifen mit Dichtmittel über einen Farbdetektor erfolgt und diese von Fahrzeugluftreifen ohne Dichtmittel räumlich getrennt. Hierdurch erfolgt die Bereitstellung eines Fahrzeugluftreifen mit Dichtmittel in Schritt a) auf besonderes effiziente Weise.

Die Erfindung soll nun anhand von weiteren Beispielen erläutert werden.

Wenigstens ein zu recycelnder Fahrzeugluftreifen mit Dichtmittel auf der Reifeninnenseite wird bereitgestellt. Die Seitenwände werden mittels eines Schnittwerkzeuges entfernt. Gemäß einem ersten Beispiel wird der Laufstreifenring nach dem Entfernen der Seitenwände umgekrempelt (umgestülpt), sodass das Dichtmittel, welches sich auf der Reifeninnenseite befindet, nun nach außen zeigt.

Das Umstülpen (Umkrempeln) des Laufstreifenringes kann auch mittels maschineller Unterstützung erfolgen.

Anschließend wird der umgekrempelte Laufstreifenring auf eine Trommel gespannt. Die Trommel wird expandiert und in Rotation versetzt.

Eine sich in nahezu konstanter Position befindliche Klinge wird nun in Kontakt mit dem Dichtmittel gebracht. Bei ständiger Rotation wird nun das Dichtmittel durch die Klinge abgetragen. Gemäß einem weiteren Beispiel wird statt einer Klinge eine Fräse verwendet. Das Dichtmittel weist beispielsweise die oben genannte Zusammensetzung auf.

Gemäß dem Beispiel wird eine Seifenlösung als Prozesshilfsmittel verwendet. Die Seifenlösung wird im Bereich der Klinge bzw. der Fräse aufgesprüht.

Nachdem das Dichtmittel vollständig entfernt wurde, werden der zurückbleibende Laufstreifenring - nunmehr ohne Dichtmittel - sowie die abgetrennten Seitenwände zerkleinert.

Das Dichtmittel wird thermisch recycelt.

Gemäß einem zweiten Beispiel wird der Laufstreifenring nach dem Entfernen der Seitenwände in axialer Richtung durchtrennt. Hierdurch entsteht ein Laufstreifenband. Dieses wird auf einem Förderband angeordnet. Dabei wird das Laufstreifenband mittels einem oder mehreren Elektromagneten auf dem Förderband fixiert.

Das Förderband wird in Bewegung gesetzt. Eine sich in nahezu konstanter Position befindliche Klinge wird nun in Kontakt mit dem Dichtmittel gebracht. Bei ständiger

Fortbewegung durch das Förderband wird nun das Dichtmittel durch die Klinge abgetragen. Gemäß einem weiteren Beispiel wird statt einer Klinge eine Fräse verwendet. Das Dichtmittel weist beispielsweise die oben genannte Zusammensetzung auf.

Gemäß dem Beispiel wird eine Seifenlösung als Prozesshilfsmittel verwendet. Die Seifenlösung wird im Bereich der Klinge bzw. der Fräse aufgesprüht.

Nachdem das Dichtmittel vollständig entfernt wurde, werden das zurückbleibende Laufstreifenband - nunmehr ohne Dichtmittel - sowie die abgetrennten Seitenwände zerkleinert.

Das Dichtmittel wird thermisch recycelt.

## Patentansprüche

1. Verfahren zum Recycling von Fahrzeugluftreifen aufweisend wenigstens ein Dichtmittel auf der dem Laufstreifen gegenüberliegenden Innenfläche (Fahrzeugluftreifen mit Dichtmittel), wobei das Verfahren wenigstens die folgenden Verfahrensschritte umfasst:
a) Bereitstellung eines zu recycelnden Fahrzeugluftreifens mit Dichtmittel;
b) Trennung der Seitenwände von der Lauffläche, sodass ein Laufstreifenring und die Seitenwände erhalten werden;
c) Umstülpen des Laufstreifenringes oder Durchtrennung des Laufstreifenringes in axialer Richtung, um das Dichtmittel zugänglich zu machen;
d) Entfernen des Dichtmittels;
e) Recycling der abgetrennten Seitenwände sowie des zurückbleibenden Laufstreifens ohne Dichtmittel;
f) Optional separates Recycling des Dichtmittels.

2. Verfahren nach Anspruch 1, **dadurch gekennzeichnet, dass** in Schritt d) das Entfernen des Dichtmittels mittels eines mechanischen Werkzeuges, insbesondere eines Schnittwerkzeuges wie einer Klinge oder einem Fräser, erfolgt.

3. Verfahren nach Anspruch 1, **dadurch gekennzeichnet, dass** in Schritt d) das Entfernen des Dichtmittels mittels eines Wasserstrahls erfolgt.

4. Verfahren nach einem der vorherigen Ansprüche, **dadurch gekennzeichnet, dass** der umgekrempelte Laufstreifenring nach Schritt c) auf eine trommelförmige Vorrichtung gespannt wird, wobei das Dichtmittel nach außen gerichtet ist.

5. Verfahren nach Anspruch 4, **dadurch gekennzeichnet, dass** die trommelförmige Vorrichtung expandierbar ist.

6. Verfahren nach einem der Ansprüche 4 oder 5, **dadurch gekennzeichnet, dass** die trommelförmige Vorrichtung und/oder die Vorrichtung, wie Klinge oder Fräse, zum Entfernen des Dichtmittels in Rotation versetzt werden und das Entfernen in Schritt d) unter Rotation erfolgt.

7. Verfahren nach einem der Ansprüche 1 bis 3, **dadurch gekennzeichnet, dass** der durchgetrennte Laufstreifenring nach Schritt c) auf einem Förderband angeordnet wird und das Entfernen in Schritt d) bei konstanter Fortbewegung erfolgt.

8. Verfahren nach einem der vorherigen Ansprüche, **dadurch gekennzeichnet, dass** in Schritt d) ein Prozesshilfsmittel, wie Wasser und/oder eine Seifenlösung, verwendet wird.

9. Verfahren nach einem der vorherigen Ansprüche, **dadurch gekennzeichnet, dass** einer oder mehrere der beschriebenen Schritte automatisiert, insbesondere mittels eines Roboters, erfolgt.

10. Verfahren nach einem der vorherigen Ansprüche, **dadurch gekennzeichnet, dass** in Schritt b) die Seitenwände mittels eines Schnittwerkzeuges oder mittels eines Lasers oder mittels Wasserstrahls abgetrennt werden.

## Claims

1. Method for recycling pneumatic vehicle tyres having at least one sealant on the inner surface situated opposite the tread (pneumatic vehicle tyres which have sealant), wherein the method comprises at least the following method steps:
a) providing a pneumatic vehicle tyre which has sealant and is to be recycled;
b) separating the sidewalls from the tread surface, such that a tread ring and the sidewalls are obtained;
c) turning the tread ring inside out, or cutting through the tread ring in an axial direction, in order to make the sealant accessible;
d) removing the sealant;
e) recycling the separated-off sidewalls and the remaining sealant-free tread;
f) optionally, recycling the sealant separately.

2. Method according to Claim 1, **characterized in that**, in step d), the sealant is removed by means of a mechanical tool, in particular a cutting tool such as a blade or a milling cutter.

3. Method according to Claim 1, **characterized in that**, in step d), the sealant is removed by means of a water jet.

4. Method according to one of the preceding claims, **characterized in that**, following step c), the inside-out tread ring is clamped onto a drum-like apparatus, wherein the sealant is directed outwards.

5. Method according to Claim 4, **characterized in that** the drum-like apparatus can be expanded.

6. Method according to either of Claims 4 and 5, **characterized in that** the drum-like apparatus and/or the device, such as a blade or milling cutter, for removing the sealant are/is set in rotation, and the removing operation in step d) is performed while rotation is taking place.

7. Method according to one of Claims 1 to 3, **characterized in that**, following step c), the cut-through tread ring is arranged on a conveyor belt, and the removing operation in step d) is performed with constant advancement.

8. Method according to one of the preceding claims, **characterized in that** a process auxiliary, such as water and/or a soap solution, is used in step d).

9. Method according to one of the preceding claims, **characterized in that** one or more of the steps described takes place in an automated manner, in particular by means of a robot.

10. Method according to one of the preceding claims, **characterized in that**, in step b), the sidewalls are separated off by means of a cutting tool or by means of a laser or by means of a water jet.

## Revendications

1. Procédé de recyclage de pneumatiques de véhicules présentant au moins un agent d'étanchéité sur la surface intérieure opposée à la bande de roulement (pneumatiques de véhicules avec agent d'étanchéité), le procédé comprenant au moins les étapes de procédé suivantes :
a) la fourniture d'un pneumatique de véhicule à recycler avec agent d'étanchéité ;
b) la séparation des parois latérales de la bande de roulement, de manière à obtenir un anneau de bande de roulement et les parois latérales ;
c) le retournement de l'anneau de bande de roulement ou le sectionnement de l'anneau de bande de roulement dans la direction axiale afin de rendre l'agent d'étanchéité accessible ;
d) l'enlèvement de l'agent d'étanchéité ;
e) le recyclage des parois latérales séparées ainsi que de la bande de roulement restante sans agent d'étanchéité ;
f) optionnellement le recyclage séparé de l'agent d'étanchéité.

2. Procédé selon la revendication 1, **caractérisé en ce qu'**à l'étape d), l'enlèvement de l'agent d'étanchéité est effectué au moyen d'un outil mécanique, notamment d'un outil de coupe tel qu'une lame ou une fraise.

3. Procédé selon la revendication 1, **caractérisé en ce qu'**à l'étape d), l'enlèvement de l'agent d'étanchéité est effectué au moyen d'un jet d'eau.

4. Procédé selon l'une quelconque des revendications précédentes, **caractérisé en ce qu'**après l'étape c), l'anneau de bande de roulement retourné est tendu sur un dispositif en forme de tambour, l'agent d'étanchéité étant orienté vers l'extérieur.

5. Procédé selon la revendication 4, **caractérisé en ce que** le dispositif en forme de tambour est expansible.

6. Procédé selon l'une quelconque des revendications 4 ou 5, **caractérisé en ce que** le dispositif en forme de tambour et/ou le dispositif, tel qu'une lame ou une fraise, pour enlever l'agent d'étanchéité est mis en rotation et l'enlèvement à l'étape d) est effectué en rotation.

7. Procédé selon l'une quelconque des revendications 1 à 3, **caractérisé en ce que** l'anneau de bande de roulement sectionné est agencé sur une bande transporteuse après l'étape c) et l'enlèvement à l'étape d) est effectué à avancement constant.

8. Procédé selon l'une quelconque des revendications précédentes, **caractérisé en ce qu'**un auxiliaire de traitement, tel que de l'eau et/ou une solution savonneuse, est utilisé à l'étape d).

9. Procédé selon l'une quelconque des revendications précédentes, **caractérisé en ce qu'**une ou plusieurs des étapes décrites sont effectuées de manière automatisée, notamment au moyen d'un robot.

10. Procédé selon l'une quelconque des revendications précédentes, **caractérisé en ce qu'**à l'étape b), les parois latérales sont séparées au moyen d'un outil de coupe ou au moyen d'un laser ou au moyen d'un jet d'eau.
